# FASCICULE DE BREVET EUROPEEN

(11) **EP 3 145 741 B1**
(45) Date de publication et mention de la délivrance du brevet: **12.08.2020**
(21) Numéro de dépôt: 15731639.9
(22) Date de dépôt: 21.05.2015
(51) Int. Cl.: B60J 5/04

(54) **PORTIÈRE RENFORCÉE DE VÉHICULE AUTOMOBILE**
VERSTÄRKTE FAHRZEUGTÜR
REINFORCED MOTOR VEHICLE DOOR

(30) Priorité: 21.05.2014 FR 1454562
(43) Date de publication de la demande: 29.03.2017
(73) Titulaire: Renault S.A.S., 92100 Boulogne-Billancourt (FR)
(72) Inventeur: PRUVOST, Laurent, F-28260 Bercheres sur Vesgre (FR)
(86) Numéro de dépôt international: PCT/FR2015/051339
(87) Numéro de publication internationale: WO 2015/177475

(56) Documents cités:
- EP-A2- 0 060 561
- EP-A2- 0 236 291
- DE-A1- 4 131 194
- US-A- 4 559 252

## Description

La présente invention se rapporte à une portière de véhicule automobile.

La réglementation européenne ECE 95 impose, quelque soit le véhicule automobile, que les portes ne doivent pas s'ouvrir lors d'un choc latéral. Or, on constate que la commande d'ouverture extérieure placée sur la face extérieure de la porte est génératrice d'ouverture intempestive lorsque, pendant un crash, la tôlerie se plie sous celui-ci et pousse cette poignée dans le sens de l'ouverture, tel que le ferait une main.

Malheureusement, les solutions aptes à éviter ces déformations sont peu nombreuses et comportent des inconvénients.

L'une des solutions consiste à disposer toute la commande d'ouverture dans une forme concave emboutie. Mais ceci a un fort impact sur l'esthétique du véhicule. Pour cette raison, cette solution est peu utilisée car elle est jugée disgracieuse.

L'autre solution consiste à ajouter une plaque sandwich plus ou moins épaisse de feuilles de matériaux composite collant, sous ou autour de la commande d'ouverture. On connait ainsi des documents US 4 559 252, DE 41 31 194, EP 060 561 et EP 236 291 des dispositifs de renforcement de portière, soit avec des plaques sandwich en matériaux composites collés sur le panneau extérieur de la portière, soit avec un profilé rigide faisant partie du renforcement et monté sur le panneau extérieur au moyen d'un élément en plastique Ce type de plaque sandwich est entre autre commercialisé sous l'appellation « BETABRACE© ». Cette solution n'est pas contraignante d'un point de vue esthétique mais est techniquement moins efficace, car cette plaque sandwich manque de raideur et est plus flexible que la première solution. II faut savoir que ces plaques sandwichs existent dans différentes épaisseurs, mais que les plus épaisses ne sont pas suffisamment raides.

La présente invention vise donc à limiter cette déformation pour éviter ce phénomène de propulsion de poignée par un pli de la tôle de la porte et supprimer les déformations de la tôle qui interviennent juste derrière la commande d'ouverture sur le panneau extérieur de porte

La portière selon l'invention comprend un panneau extérieur, une commande d'ouverture et un dispositif de renforcement avec une plaque sandwich composée de feuilles de matériaux composites collée sur une partie intérieure du panneau extérieur, le dispositif est caractérisé en ce que le dispositif de renforcement comprend un profilé rigide collé à la plaque sandwich de matériaux composites. Le profilé permet un renforcement de la plaque sandwich et le caractère collant de la plaque permet de tenir le profilé sans nécessiter de soudage qui aurait un effet négatif sur l'aspect extérieur de la porte.

Avantageusement, le profilé est métallique. Ce type de profilé est relativement économique à produire. Il sera de préférence de même composition que le panneau extérieur de la porte.

Selon une première variante, le profilé est tubulaire.

Selon une deuxième variante, le profilé est réalisé par emboutissage. Il est ainsi possible de réaliser toute sorte de profils : en Ω, en U, en L, etc...

Avantageusement, le profilé est disposé entre la plaque sandwich et la partie intérieure du panneau extérieur. Le profilé est ainsi collé à la plaque sandwich qui est elle-même collée à la partie intérieure du panneau extérieur de la porte, le profilé est ainsi maintenu à la porte.

Selon une disposition particulière, le profilé est plus court que la plaque sandwich et que le profilé a au moins une extrémité couverte par ladite plaque. Le profilé pourra ainsi complétement être recouvert par la plaque sandwich et être protégé des saletés et de l'humidité.

Selon une seconde disposition, le profilé est plus long que la plaque sandwich et que le profilé a au moins une extrémité dépassant de ladite plaque. Si le profilé est plus long, il permet une protection plus étendue de la commande d'ouverture.

Selon une troisième disposition, le profilé est disposé sur au moins un des bords de la plaque sandwich. Le profilé est en U ou en L, une de ses faces sera collée du coté collant sur un bord de la plaque sandwich ce qui permet son maintien. Dans le cas du profilé en U, les branches du U pourront être serrées sur la plaque sandwich et ainsi aussi être maintenu sur ladite plaque. Le profilé peut faire tout le tour de la plaque sandwich.

Avantageusement, la plaque sandwich présente une ouverture et le profilé est disposé sur au moins un des bords de ladite ouverture. Dans ce cas le profilé en U ou en L est placé à l'intérieur de l'ouverture.

Avantageusement, la plaque sandwich présente une ouverture traversée par le profilé. Dans le cas d'un profilé tubulaire rond ou carré ou en Ω, celui-ci va traverser la plaque sandwich, il aura au moins une partie disposée du coté collant de la plaque sandwich. Il pourra par exemple avoir une première partie disposée du coté non collant de la plaque, une deuxième partie disposée du coté collant et une troisième partie du coté non collant, le profilé est entrelacé sur la plaque comme une aiguille dans un tissu.

L'invention concerne également, un véhicule équipé d'une portière avec au moins une des caractéristiques précédentes.

D'autres avantages pourront encore apparaître à l'homme du métier à la lecture des exemples ci-dessous, illustrés par les figures annexées, donnés à titre d'exemple :
- La figure 1 est une vue de profil d'une porte avec une partie renforcée de l'état de la technique,
- La figure 2 est le détail A de la partie renforcée selon une première variante de l'invention,
- La figure 3 est le détail A de la partie renforcée selon une deuxième variante,
- La figure 4 est une vue en perspective d'un exemple de profilé,
- La figure 5 est le détail A de la partie renforcée selon une troisième variante,
- La figure 6 est une vue en perspective d'un autre exemple de profilé,
- La figure 7 est une vue du coté intérieur de la portière de la partie renforcée,
- La figure 8 est une vue du coté intérieur de la portière d'une réalisation de la partie renforcée,
- La figure 9 est une vue du coté intérieur de la portière d'une autre réalisation de la partie renforcée,
- La figure 10 est une vue de coté d'un véhicule équipé du dispositif.

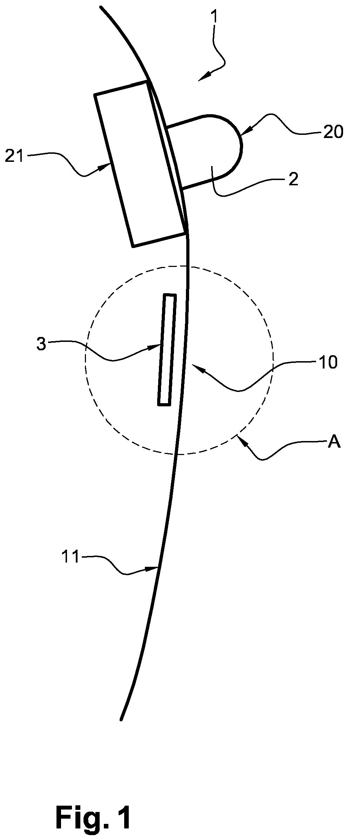

La portière 1 illustrée à la figure 1 comprend une tôle ou panneau extérieur 10 avec une commande d'ouverture 2 avec une poignée 20 de préhension disposée à l'extérieur du véhicule et un mécanisme de commande 21 disposé à l'intérieur du panneau extérieur de la portière. On considèrera dans la suite de la description que l'extérieur correspond à l'extérieur du véhicule et donc l'extérieur de la portière et l'intérieur à l'intérieur de la portière. Le haut correspond au haut des figures et le bas au bas des figures. La portière 1 comprend également une plaque de renforcement 3 collante disposée du coté intérieur de la portière 1.

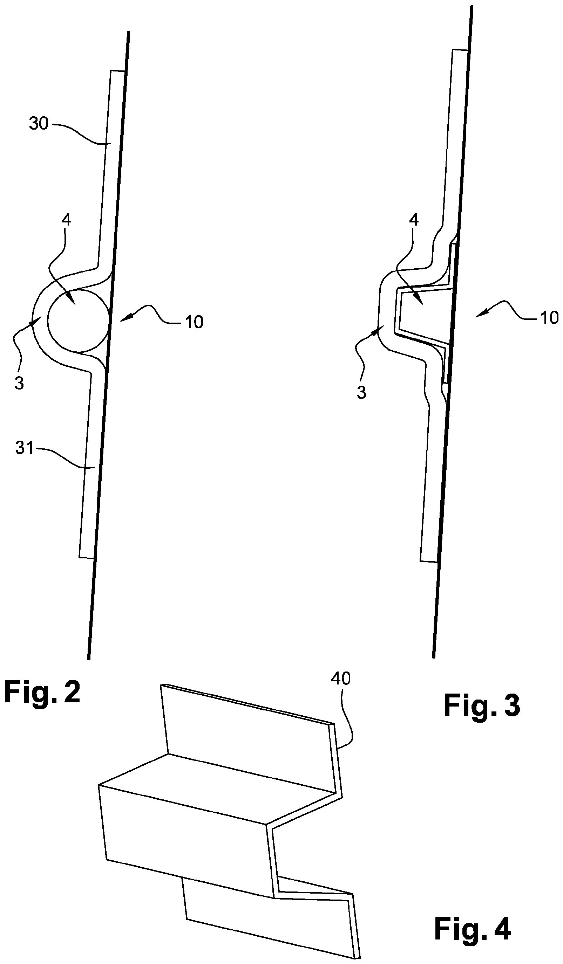

Dans les exemples des figures 2 et 3, la portière 1 est renforcée par une plaque 3 collante de forme sensiblement rectangulaire, et un profilé 4 est disposé entre la partie intérieur 11 du panneau extérieur 10 et la plaque 3. Dans la figure 2, le profilé 4 est de forme tubulaire tandis qu'il en forme de Ω dans la figure 3. La plaque 3 prend la forme du profilé 4 et il dépasse dudit profilé 4dans sa partie haute 30 et sa partie basse 31.

Dans les figures 3 et 4, le profilé 40 peut être réalisé par emboutissage.

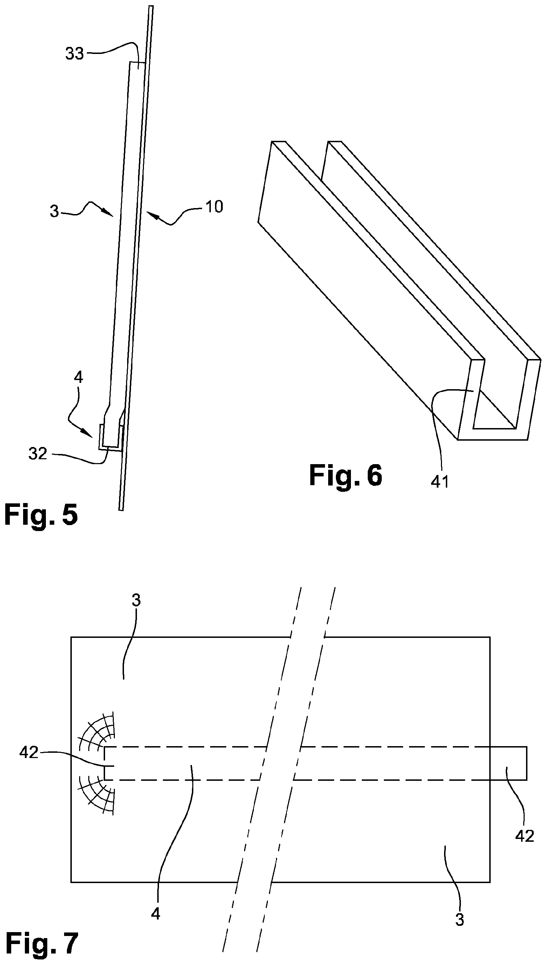

Dans l'exemple de la figure 5, le profilé 41 est en U, également réalisé par emboutissage, il est placé autour du bord inférieur 32 de la plaque 3, mais il pourrait également être placé autour du bord supérieur 33, voire tout autour de la plaque 3.

Le profilé 4 peut être complètement recouvert par la plaque 3 comme illustré coté gauche de la figure 7 ou il peut dépasser comme montré coté droit de la figure 7, ses extrémités 42 dépassant de la plaque 3. Le profilé 4 peut également être affleurant.

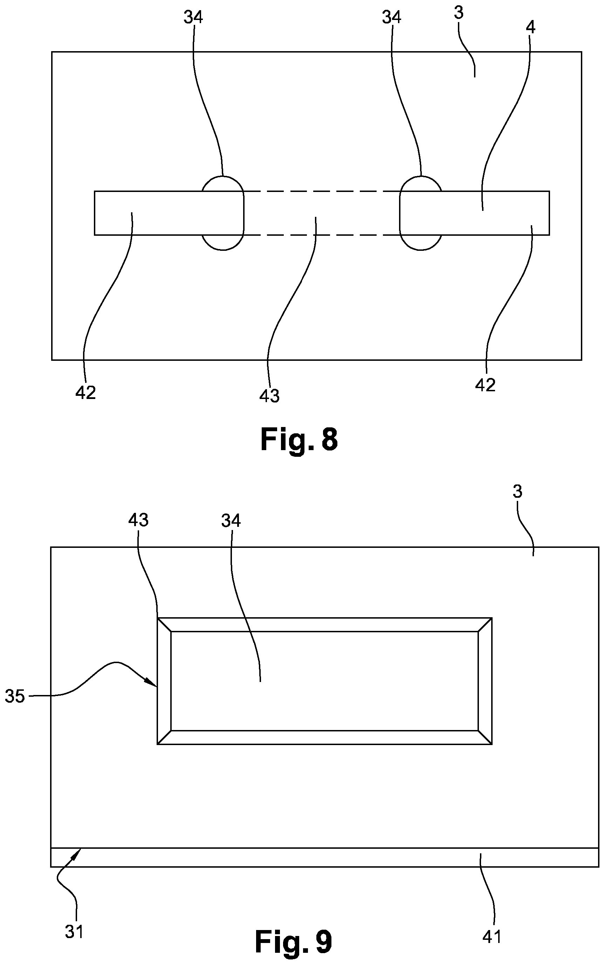

Le profilé 4 de la figure 8 est entrelacé avec la plaque 3, c'est-à-dire que les extrémités 42 sortent de la plaque 3 par des trous 34 tandis que la partie centrale 43 du profilé 4 est placé sous la plaque 3 au contact du panneau extérieur 10. Ici les trous 34 sont de forme ovales, mais ils pourraient être carrés, rectangulaires ou ronds par exemple.

A la figure 9, la plaque 3 est découpée d'une ouverture 34 rectangulaire, mais celle-ci pourrait tout à fait avoir une autre forme. Ici, le profilé 41 est en forme de U est placé dans la partie basse 31 de la plaque, il y a aussi un profilé 43 en forme de U sur tout le bord intérieur 35 de l'ouverture 34.

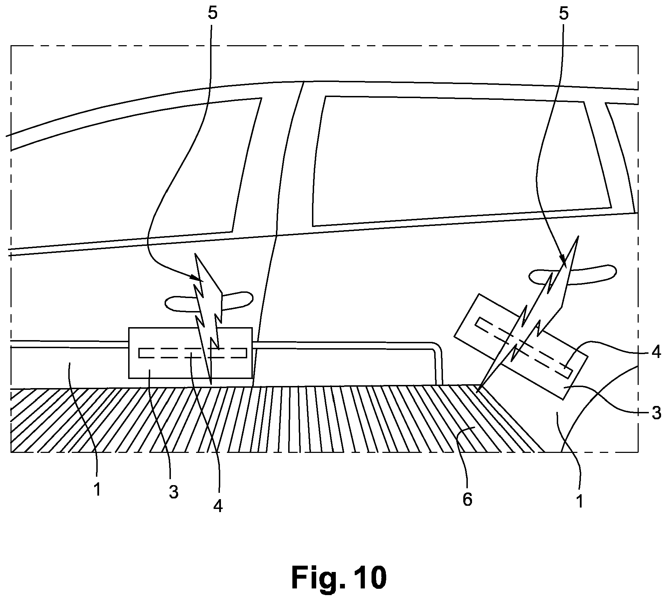

On voit sur la figure 10 que lors d'un choc latéral d'un chariot 6, les portières 1 se déforment selon des lignes 5, il est donc préférable de disposer les plaques 3 avec les profilés 4 perpendiculairement à ces lignes 5 de déformations.

D'autres formes de plaques et de profilés sont possibles sans sortir du cadre de la présente invention.

## Revendications

1. Portière (1) comprenant un panneau extérieur (10), une commande d'ouverture (21) et un dispositif de renforcement avec une plaque (3) sandwich composée de feuilles de matériaux composites, ladite plaque étant collée sur une partie intérieure (11) du panneau extérieur (10) **caractérisé en ce que** le dispositif de renforcement comprend un profilé (4, 40, 41 43) rigide collé à la plaque (3) sandwich de matériaux composites.

2. Portière (1) selon la revendication 1 **caractérisé en ce que** le profilé (4) est métallique.

3. Portière (1) selon une des revendications précédentes **caractérisé en ce que** le profilé (4) est tubulaire.

4. Portière (1) selon une des revendications 1 ou 2 **caractérisé en ce que** le profilé (40, 41, 43) est réalisé par emboutissage.

5. Portière (1) selon une des revendications précédentes **caractérisée en ce que** le profilé (4) est disposé entre la plaque (3) sandwich et la partie intérieure (11) du panneau extérieur (10).

6. Portière (1) selon la revendication précédente **caractérisé en ce que** le profilé (4) est plus court que la plaque (3) sandwich et que le profilé (4) a au moins une extrémité (42) couverte par ladite plaque (3).

7. Portière (1) selon la revendication 5 **caractérisé en ce que** le profilé (4) est plus long que la plaque (3) sandwich et que le profilé (4) a au moins une extrémité (42) dépassant de ladite plaque (3).

8. Portière (1) selon une des revendications 1 ou 3 **caractérisé en ce que** le profilé (41, 43) est disposé sur au moins un des bords (32, 33, 35) de la plaque (3) sandwich.

9. Portière (1) selon la revendication précédente **caractérisé en ce que** la plaque (3) sandwich présente une ouverture (34) et que le profilé (43) est disposé sur au moins un des bords (35) de ladite ouverture (34).

10. Portière (1) selon une des revendications 1 à 7 précédentes **caractérisé en ce que** la plaque (3) sandwich présente une ouverture (34) traversée par le profilé (4).

11. Véhicule équipé d'une portière (1) selon une des revendications précédentes.

## Patentansprüche

1. Fahrzeugtür (1), die eine Außenverkleidung (10), eine Öffnungssteuerung (21) und eine Verstärkungsvorrichtung mit einer Sandwichplatte (3) enthält, die aus Folien von Verbundwerkstoffen zusammengesetzt ist, wobei die Platte auf einen inneren Teil (11) der Außenverkleidung (10) geklebt wird, **dadurch gekennzeichnet, dass** die Verstärkungsvorrichtung ein an die Sandwichplatte (3) von Verbundwerkstoffen geklebtes starres Profilteil (4, 40, 41, 43) enthält.

2. Fahrzeugtür (1) nach Anspruch 1, **dadurch gekennzeichnet, dass** das Profilteil (4) aus Metall ist.

3. Fahrzeugtür (1) nach einem der vorhergehenden Ansprüche, **dadurch gekennzeichnet, dass** das Profilteil (4) rohrförmig ist.

4. Fahrzeugtür (1) nach einem der Ansprüche 1 oder 2, **dadurch gekennzeichnet, dass** das Profilteil (40, 41, 43) durch Tiefziehen hergestellt wird.

5. Fahrzeugtür (1) nach einem der vorhergehenden Ansprüche, **dadurch gekennzeichnet, dass** das Profilteil (4) zwischen der Sandwichplatte (3) und dem inneren Teil (11) der Außenverkleidung (10) angeordnet ist.

6. Fahrzeugtür (1) nach dem vorhergehenden Anspruch, **dadurch gekennzeichnet, dass** das Profilteil (4) kürzer ist als die Sandwichplatte (3), und dass das Profilteil (4) mindestens ein von der Platte (3) bedecktes Ende (42) hat.

7. Fahrzeugtür (1) nach Anspruch 5, **dadurch gekennzeichnet, dass** das Profilteil (4) länger ist als die Sandwichplatte (3), und dass das Profilteil (4) mindestens ein über die Platte (3) vorstehendes Ende (42) hat.

8. Fahrzeugtür (1) nach einem der Ansprüche 1 oder 3, **dadurch gekennzeichnet, dass** das Profilteil (41, 43) auf mindestens einem der Ränder (32, 33, 35) der Sandwichplatte (3) angeordnet ist.

9. Fahrzeugtür (1) nach dem vorhergehenden Anspruch, **dadurch gekennzeichnet, dass** die Sandwichplatte (3) eine Öffnung (34) aufweist, und dass das Profilteil (43) auf mindestens einem der Ränder (35) der Öffnung (34) angeordnet ist.

10. Fahrzeugtür (1) nach einem der vorhergehenden Ansprüche 1 bis 7, **dadurch gekennzeichnet, dass** die Sandwichplatte (3) eine vom Profilteil (4) durchquerte Öffnung (34) aufweist.

11. Fahrzeug, das mit einer Fahrzeugtür (1) nach einem der vorhergehenden Ansprüche ausgestattet ist.

## Claims

1. Door (1) comprising an exterior panel (10), a control (21) for opening and a device for reinforcing with a sandwich plate (3) made up of sheets of composite materials, said plate being bonded to an interior part (11) of the exterior panel (10), **characterized in that** the reinforcing device comprises a rigid section piece (4, 40, 41, 43) bonded to the sandwich plate (3) made of composite materials.

2. Door (1) according to Claim 1, **characterized in that** the section piece (4) is made of metal.

3. Door (1) according to one of the preceding claims, **characterized in that** the section piece (4) is tubular.

4. Door (1) according to one of Claims 1 and 2, **characterized in that** the section piece (40, 41, 43) is produced by pressing.

5. Door (1) according to one of the preceding claims, **characterized in that** the section piece (4) is positioned between the sandwich plate (3) and the interior part (11) of the exterior panel (10).

6. Door (1) according to the preceding claim, **characterized in that** the section piece (4) is shorter than the sandwich plate (3) and **in that** the section piece (4) has at least one end (42) covered by said plate (3).

7. Door (1) according to Claim 5, **characterized in that** the section piece (4) is longer than the sandwich plate (3) and **in that** the section piece (4) has at least one end (42) protruding beyond said plate (3).

8. Door (1) according to one of Claims 1 and 3, **characterized in that** the section piece (41, 43) is placed on at least one of the edges (32, 33, 35) of the sandwich plate (3).

9. Door (1) according to the preceding claim, **characterized in that** the sandwich plate (3) has an opening (34) and **in that** the section piece (43) is placed along at least one of the edges (35) of said opening (34).

10. Door (1) according to one of the preceding Claims 1 to 7, **characterized in that** the sandwich plate (3) has an opening (34) through which the section piece (4) passes.

11. Vehicle equipped with a door (1) according to one of the preceding claims.
